# EUROPEAN PATENT APPLICATION

(11) **EP 1 199 099 A1**
(43) Date of publication of application: **24.04.2002**
(21) Application number: 00810968.8
(22) Date of filing: 19.10.2000
(51) Int. Cl.: B01J 8/02, B01J 8/08, B01J 8/18, B01J 8/24

(54) **Reactor**

(71) Applicant: Amersham Biosciences AB, 751 84 Uppsala (SE)
(72) Inventor: Weibel, Ludwig, 9200 Gossau (CH)
(74) Representative: Liebetanz, Michael, Dipl.-Phys.

(57) **Abstract**

A fluid to be treated is guided through an adsorption medium reactor (1), especially a fluidised bed reactor. The flux starts from the bottom (3) of the reactor (1) along the longitudinal axis of the reactor (1). There are provided one or more outlets (18) for the fluid to be treated inside the reactor (1) at a distance from, but near to, the bottom (3) of said reactor (1) directed mainly towards said bottom (3) of said reactor (1).

## Description

The invention relates to an adsorption medium reactor, especially a fluidised bed reactor, through which the fluid to be treated is guided starting from the bottom of the reactor along the longitudinal axis of the reactor.

Adsorption medium reactors with a continuous fluidised bed of a granular absorption medium are known to be used in various applications. Usually, a permeable bottom wall provides a throughflow of the liquid through the reactor. This permeable wall is equipped with a mesh width withholding small particles. In chromatographic applications, this mesh should be small enough to withhold the gel filling the reactor and large enough to let pass the particles to be distributed in the columns. This is a complicated procedure and there are no satisfactory results with the reactors of the prior art.

It is therefore an object of the invention to provide for a simple reactor with a fluidised bed, with means for reliably preventing a particle exchange without inhibiting the fluid flow.

In the present invention this object is solved by providing an reactor according to the preamble of claim 1, characterised in that one or more outlets in to the reactor for the fluid to be treated are provided inside the reactor at a distance from, but near to, the bottom of said reactor and directed mainly towards said bottom of said reactor.

In a preferred embodiment of the present invention the tube guiding the fluid towards the outlets has an inner cross-sectional area which is equal to the sum of the inner cross-sectional area of all outlets connected thereto and in that the tube is divided in a multitude of portions leading to identical outlets arranged in a symmetrical way in respect to the tube.

Advantageous further developments of the invention may be taken from the dependent claims. In the following, the invention will be explained in detail with the aid of the embodiments represented schematically in the drawings. The drawings show:
- Fig. 1: a schematical perspective view through a fluidised bed reactor with first embodiment of an outlet, in accordance with the present invention;
- Fig. 2: an enlarged cross-section through the bottom of a reactor according to a second embodiment of the present invention having the inlet coming from below the bottom of the reactor;
- Fig. 3: a schematical view on two possibilities of spiderlike distribution of outlets in the reactor in accordance with the present invention; and
- Fig. 4: a schematical view of two further embodiments of distribution of fluid for the fluidised bed inside the reactor in accordance with the present invention.

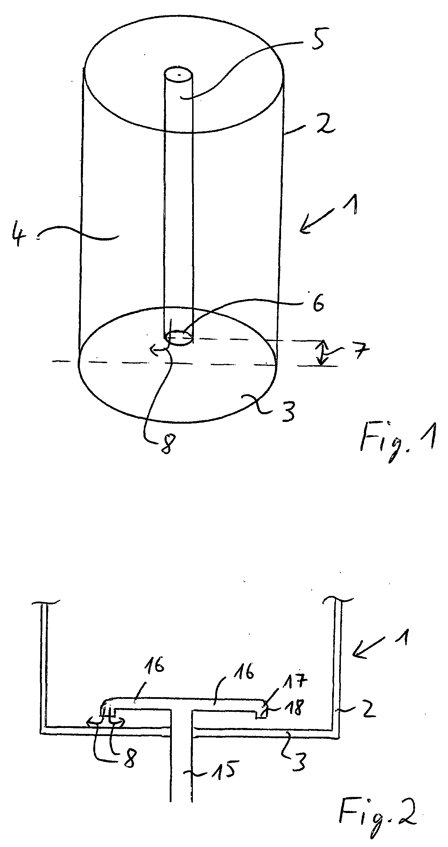

Fig. 1 shows a schematical perspective view of an embodiment of an adsorption medium reactor 1 with a cylindrical wall 2 and a bottom 3. The bottom 3 is a disk, preferably coated with Teflon (by DuPont) or another smooth surface or it is a polished metallic surface. Alternatively, the bottom 3 can be equipped with a mesh (as described above) to allow combinations of flux and to allow elution of adsorbed material in packed bed mode. The space 4 between the walls 2 is filled with the medium creating the fluidised bed (not represented in the Fig.). In the central region of the reactor 1 is placed a rigid tube 5 extending along the longitudinal axis of the reactor 1 vertically from the top of the reactor 1 close to the bottom 3. The end 6 of the tube is directed towards the bottom 3 of the reactor 1. Between the lower end 6 of the tube 5 and the bottom 3 of the reactor 1 is a gap 7 allowing the flow of liquid 8 descending through the tube 5 to be distributed equally in all directions around the outlet 6. The diameter of the reactor 1 can be in the range of several centimeters. The diameter of the tube 5 is e.g. 5 millimetres. The relationship between both diameters may be chosen to be between 1:5 and 1:20. An practical upper limit is given through the fact that the liquid descending within the tube 5 must also reach the fluidised bed near the reactor wall 2 and this depends on the velocity of the fluid, the horizontal distance to the reactor walls 2 and the kind of fluid.

The gap 7 between the bottom 3 of the reactor 1 and the lower end 6 of the tube 5 may be chosen between 1 and 5 millimetres preferably between 2 and 3 millimetres. This gap 7 gives the fluid descending the tube 5 enough space to follow the horizontal direction of the arrow 8 long enough and to enter the fluidised bed over the whole cross-section of the reactor 1. However, the particles of this bed are prevented from entering and blocking the bottom 6 of the tube 5. The diameter of the reactor 1 can be chosen between several centimetres and 32 to 40 centimetres. The diameter of the tube 5 can be chosen between 2 and 10 millimetres and preferably in the range of 6 millimetres.

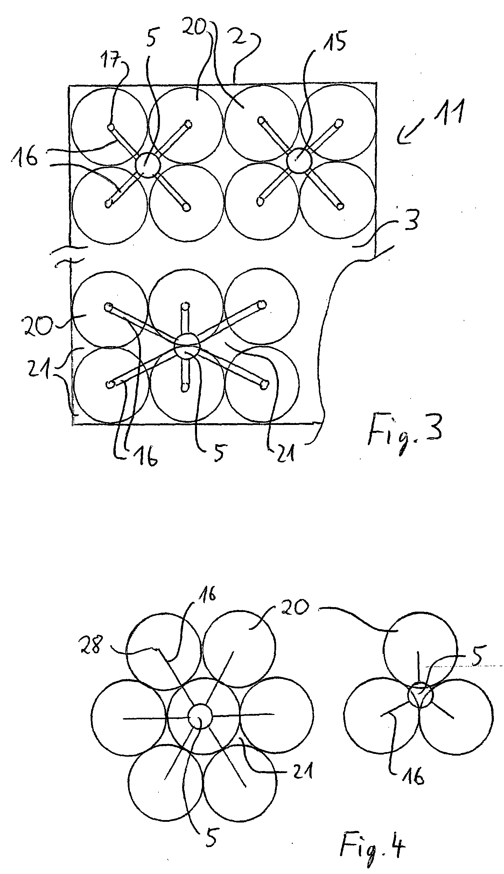

Larger vessels can be constructed by arranging several reactors 1, one beside another without intervening walls so that only the outer circumferential wall remains. This forms the reactor embodiments as shown in Fig. 3 and 4.

Another way to distribute the fluid, as shown in Fig. 2, is to place a tube 15 beneath the reactor 1 which tube extends through the bottom 3. Then the tube 15 is directed into one or more horizontal branches 16. These horizontal branches 16 are oriented parallel to the bottom 3 until the point where they are bent in a zone 17 to a lower end with an outlet 18 parallel to the bottom 3 to of the reactor 1. The gap between the bottom 3 and the outlet 18 is similar to the gap between the bottom 3 and the outlet 6 shown in Fig. 1. With directions and branches 16 and outlets 18 similar to tube 5 and end 6, respectively, the diameter of the reactor 1 according to Fig. 2 is chosen preferably to be twice the diameter of the reactor 1 of Fig. 1, so that every tube portion 16 with outlet 18 gives rise to similar liquid flows 8 as in Fig. 1.

Fig. 3 shows schematical views from above of a reactor 1 with sidewalls 2 which are rectangular. The edges of the circumference wall should be rounded in order to achieve a minimal of dead zones in larger vessels. The tube 5 can be directed from above or can come from below as indicated in the upper part on the right side of Fig. 3. The tube 5 or 15 has four tube portions 16 with a combined cross-sectional area which is equivalent to the cross-sectional area of tube 5 or 15. These tube portions 16 end in a bent portion 17 with an outlet directed towards the bottom 3 of the reactor 1. Every circle 20 in Fig. 3 relates to the zone which is covered by every outlet of the portions 16. The diameter of the active laminar flow distribution circle 20 can be calculated from the gap 7, the diameter of the outlet 6, the kind of fluidised bed and the fluid and its pressure. As can be seen from this example the single reactor 1 of Fig. 1 can be replaced by a multiple reactor 11 in Fig. 3 which is a directly scalable device.

In the lower part of Fig. 3 another distribution of tube outlets 16 is demonstrated, wherein six portions 16 are distributed to guide the fluid coming from tube 5. The zones 21 beyond the circles 20 are zones which are more distant from the outlets 18 than twice the distance between two outlets 18. The laminar flow of liquid is therefore not so strong. Nevertheless the fluidised bed also receives fluid in these regions.

Fig. 4 shows two other schematical views of distribution of outlets. The outlets 28 are at the end of the tubes 16 and create a stabilised laminar flow of fluid especially in the circles 20. The left part of Fig. 4 shows a tube 5 with six horizontal tube portions 16 together with one central outlet just below the tube 5. This outlet must be chosen smaller or to be reached after an additional way in a tube portion below one of the tube portions 16 in order to have the same pressure of the outgoing fluid as in all other end portions 28.

Another possibility of distribution is shown with the triangular distribution as demonstrated on the right hand side of Fig. 4. Both embodiments of Fig. 4 have the advantage in comparison with the embodiments of Fig. 3 that the surface of the space 21 between the circles 20 is smaller. Therefore the distribution of fluid is more uniform.

The incoming stream of fluid is directed perpendicularly, i.e. right angled, onto the bottom 3 of the respective reactor 1. However, angles different to 90° may be chosen with the result of less symmetry of the reactor 1. The main principle of all shown embodiments is the upflow behaviour of the fluid with an initial downflow onto the bottom 3 of the reactor 1.

The reactor 1 can be used for all kind of experimental stages from equilibration to cleaning. It is especially possible to provide reactors 1 for a laboratory scale since the reactor 1 is directly scalable. The outlets 8 or 18 are placed at a fixed position some millimetres above the sedimented bed within the reactor 1, so that a multitude of similar outlets within a bigger reactor (see Fig. 3 or 4) behave as the one outlet within reactor 1 of Fig. 1.

## Claims

1. An adsorption medium reactor (1), especially a fluidised bed reactor, through which the fluid to be treated is guided starting from the bottom (3) of the reactor (1) along the longitudinal axis of the reactor (1), **characterised in that** one or more outlets (6, 18) in to the reactor for the fluid to be treated are provided inside the reactor (1) at a distance (7) from, but near to, the bottom (3) of said reactor (1) and directed mainly towards said bottom (3) of said reactor (1).

2. The reactor according to claim 1, **characterised in that** every outlet (6, 18) is arranged to direct an outgoing fluid flow vertically onto the bottom (3) of the reactor (1).

3. The reactor according to claim 1 or 2, **characterised in that** a tube (5) is provided guiding the fluid towards the outlet (6, 18), wherein the tube (5) is positioned parallel to the longitudinal axis of the reactor (1) from the top of the reactor (1) towards the bottom (3).

4. The reactor according to claim 1 or 2, **characterised in that** a tube (15) is provided for guiding the fluid towards the outlets (18), wherein the tube (15) is positioned parallel to the longitudinal axis of the reactor (1) and extends from under the bottom (3) of the reactor (1) through this bottom (3), and inside the reactor (1) the tube (15) is bent (16, 17) towards said bottom (3).

5. The reactor according to one of claims 1 to 4, **characterised in that** more than one outlet (18) are provided and **in that** these outlets (18) are distributed in the plan perpendicular to the longitudinal axis of the reactor (1) in equidistant columns and rows.

6. The reactor according to one of claims 1 to 4, **characterised in that** more than one central outlet (18) are provided and **in that**, in the plan perpendicular to the longitudinal axis of the reactor (1), around each of these central outlets (18) six further outlets (28) are distributed in a hexagon.

7. The reactor according to one of claims 1 to 6, **characterised in that** the cross-sectional area of the one (6) or the sum of the cross-sectional areas of all outlets (18) is between 1/5^{th} to 1/20^{th} smaller then the cross-sectional area of the reactor (1, 11).

8. The reactor according to one of claims 1 to 7, **characterised in that** the tube (15) guiding the fluid towards the outlets (18) has an inner cross-sectional area which is equal to the sum of the inner cross-sectional area of all outlets (18) connected thereto and **in that** the tube (15) is divided in a multitude of portions (16) leading to identical outlets (18) arranged in a symmetrical way in respect to the tube (15).
